# EUROPÄISCHE PATENTANMELDUNG

(11) **EP 3 517 412 A1**
(43) Veröffentlichungstag der Anmeldung: **31.07.2019**
(21) Anmeldenummer: 19152346.3
(22) Anmeldetag: 17.01.2019
(51) Int. Cl.: B62D 25/00, B62D 27/02, B62D 25/02, B29C 65/48, B32B 5/02, B32B 7/12, B29C 65/00, B32B 15/14, B62D 25/04, B62D 25/08

(54) **SYSTEM EINES VERSTÄRKTEN ELEMENTES EINES KRAFTFAHRZEUGES**

(30) Priorität: 25.01.2018 EP 18153513
(71) Anmelder: SIKA TECHNOLOGY AG, 6340 Baar (CH)
(72) Erfinder: Munzinger, Noah, 8047 Zürich (CH); Rheinegger, Urs, 8105 Regensdorf (CH); Jäger, Urs, 8645 Jona (CH)
(74) Vertreter: Sika Patent Attorneys

(57) **Zusammenfassung**

Ein System (1) eines verstärkten Elementes (2) eines Kraftfahrzeuges umfasst: ein Element (2) eines Kraftfahrzeuges; einen Klebstoff (3), welcher auf dem Element angeordnet ist; und ein flächenförmiges Textil (4), welches auf dem Element (2) angeordnet ist; wobei der eine Klebstoff zugleich ein Matrixharz für Fasern des flächenförmigen Textils bildet und das flächenförmige Textil mit dem Element verklebt.

## Beschreibung

Die vorliegende Erfindung betrifft ein System eines verstärkten Elementes eines Kraftfahrzeuges sowie ein Verfahren zur Verstärkung eines Elementes eines Kraftfahrzeuges.

Vielfach werden Karosserien von Kraftfahrzeugen mit leichtgewichtigen Konstruktionen ausgebildet. Dabei ist es oftmals wünschenswert, diese leichtgewichtigen Konstruktionen gezielt an gewissen Orten zu verstärken. Dabei können beispielsweise Bereiche der Karosserie, in welchen Hohlräume gebildet werden, durch eingesetzte Verstärkungselemente verstärkt werden. Andererseits können aber auch Verstärkungselemente auf flächige Bereiche der Karosserie verklebt werden, um diese zu verstärken.

Ein vorbekannter Ansatz zur Verstärkung von leichtgewichtigen Konstruktionen in Kraftfahrzeugen besteht darin, dass vorgefertigte Faserverbundkunststoffe mit einem Klebstoff auf Abschnitte der Konstruktion geklebt werden. Dabei werden die Faserverbundkunststoffe vorgeformt und ausgehärtet und dann auf die Konstruktion des Kraftfahrzeuges geklebt. Dies geschieht typischerweise mit einkomponentigen heisshärtenden Epoxidharzklebstoffen, welche typischerweise in einem Lackofen ausgehärtet werden.

Nachteilig an diesem bekannten Ansatz ist es, dass dieser eine vorgelagerte Produktion der Faserverbundkunststoffteile bedingt, was aufwendig, teuer und zeitintensiv ist. Zudem müssen bei späteren Designanpassungen jeweils neue Werkzeuge bzw. Gussformen hergestellt werden.

Es ist daher eine Aufgabe der vorliegenden Erfindung, ein verbessertes System eines verstärkten Elementes eines Kraftfahrzeuges bzw. ein verbessertes Verfahren zur Verstärkung eines Elementes eines Kraftfahrzeuges zur Verfügung zu stellen, welches kostengünstiger ist und gleichzeitig eine flexiblere Anwendung erlaubt.

Diese Aufgabe wird zunächst gelöst durch ein System eines verstärkten Elementes eines Kraftfahrzeuges, das System umfassend: ein Element eines Kraftfahrzeuges; einen Klebstoff, welcher auf dem Element angeordnet ist; und ein einziges flächenförmiges Textil, welches auf dem Element angeordnet ist; wobei der eine Klebstoff zugleich ein Matrixharz für Fasern des flächenförmigen Textils bildet und das flächenförmige Textil mit dem Element verklebt.

Diese Lösung bietet den Vorteil, dass dadurch keine vorgefertigten und vorgeformten Elemente hergestellt werden müssen. Somit kann sowohl die Vorproduktion als auch der Werkzeugbau, insbesondere das Herstellen von Gussformen, eingespart werden. Ein weiterer Vorteil besteht darin, dass das hier vorgeschlagene System flexibel an verschiedenste Oberflächenformen anpassbar ist.

Ein Kerngedanke der vorliegenden Erfindung ist es, dass der das Element des Kraftfahrzeuges verstärkende Faserverbundkunststoff nicht vorgefertigt wird, sondern direkt auf dem zu verstärkenden Element ausgebildet wird. Dabei werden die einzelnen Komponenten, insbesondere das flächenförmige Textil und der Klebstoff, einzeln oder zusammen auf das zu verstärkende Element angeordnet, wobei der Klebstoff in dieser Phase noch nicht ausgehärtet ist. Dadurch ist das flächenförmige Textil flexibel und kann einer Oberflächenstruktur des zu verstärkenden Elementes angepasst werden.

Das flächenförmige Textil und der Klebstoff werden dann in einem Schritt zu einem Faserverbundkunststoff ausgebildet und an das Element verklebt: Durch die Aushärtung des Klebstoffes entsteht einerseits der Faserverbundkunststoff, und andererseits wird dieser gleichzeitig an das zu verstärkende Element verklebt. Somit sind nicht mehr zwei verschiedene Klebstoffe (einer zur Herstellung des Faserverbundkunststoffes, und ein zweiter zur Verklebung des Faserverbundkunststoffes mit dem zu verstärkenden Element) notwendig, sondern diese beiden Klebstoffe werden durch nur einen einzigen Klebstoff ersetzt, welcher gleichzeitig beide Funktionen erfüllt und dadurch eine grosse Ersparnis an Arbeitsschritten mit sich bringt.

Insbesondere vorteilhaft ist dabei, dass der Lackierofen, durch welchen die Karosserie standardmässig durchgeführt wird, genutzt werden kann, um den Klebstoff auszuhärten und dabei den Faserverbundkunststoff auszubilden und diesen an das zu verstärkende Element zu verkleben.

In der hier vorgeschlagenen Lösung wird das System eines verstärkten Elementes eines Kraftfahrzeuges ausschliesslich durch ein einziges flächenförmiges Textil zusammen mit dem Klebstoff und dem Element gebildet.

In einer beispielhaften Ausführungsform ist der Klebstoff ein härtbarer Klebstoff.

In einer beispielhaften Weiterbildung ist der Klebstoff ein hitzehärtbarer Klebstoff.

Dies hat den Vorteil, dass der Lackierofen, welcher standardmässig bei der Herstellung von Karosserien genutzt wird, eingesetzt werden kann, um den Klebstoff auszuhärten.

In einer beispielhaften Weiterbildung härtet der Klebstoff bei einer Temperatur von zumindest 120°C, bevorzugt bei einer Temperatur von zumindest 140°C, besonders bevorzugt bei einer Temperatur von zumindest 160°C aus.

In einer beispielhaften Ausführungsform ist der Klebstoff ein Epoxidharzklebstoff oder ein Polyurethanklebstoff.

In einer weiteren beispielhaften Ausführungsform ist der Klebstoff ein Einkomponentenklebstoff oder ein Zweikomponentenklebstoff.

Ein konkretes Ausführungsbeispiel für einen möglichen Klebstoff zur Ausführung der vorliegenden Erfindung ist ein einkomponentiger, heiss härtender Klebstoff auf Epoxidharzbasis, welcher unter dem Handelsnamen SikaPower®-497 erhältlich ist.

In einer beispielhaften Ausführungsform hat der Klebstoff nach einer Härtung ein E-Modul von zumindest 50 MPa, vorzugsweise von zumindest 100 MPa, vorzugsweise von zumindest 150 MPa, vorzugsweise von zumindest 200 MPa, besonders bevorzugt von zumindest 300 MPa.

Der Vorteil eines Klebstoffes mit einem oben beschriebenen E-Modul nach der Härtung hat den Vorteil, dass dadurch eine besonders effektive Verstärkung des Elementes erzielbar ist.

In einer beispielhaften Ausführungsform ist der Klebstoff als Klebstofffilm auf dem Element angeordnet.

In einer beispielhaften Ausführungsform hat der Klebstoff eine durchschnittliche Dicke von 0,1 mm bis 5,0 mm, bevorzugt von 0,2 mm bis 4 mm, besonders bevorzugt von 0,5 mm bis 3,0 mm.

In einer beispielhaften Weiterbildung hat der Klebstoff eine solche durchschnittliche Dicke vor einer Aushärtung des Klebstoffes.

Das Vorsehen eines Klebstoffes bzw. Klebstofffilmes mit oben genannter durchschnittlicher Dicke bietet den Vorteil, dass dadurch genügend Klebstoff zur Verfügung steht, um eine Matrix für die Fasern des flächenförmigen Textils zu bilden, und gleichzeitig das flächenförmige Textil mit dem Element zu verkleben.

In einer beispielhaften Ausführungsform hat das flächenförmige Textil eine Dicke von 0,5 mm bis 1,5 mm, bevorzugt von 0,6 mm bis 1,4 mm, besonders bevorzugt von 0,7 mm bis 1,3 mm.

Flächenförmige Textilien mit oben genannter Dicke haben den Vorteil, dass solche Textilien für die Verstärkung von Elementen eines Kraftfahrzeuges hinsichtlich mechanischen Eigenschaften und Gewicht besonders vorteilhaft sind.

In einer beispielhaften Ausführungsform enthält das flächenförmige Textil Glasfasern oder Karbonfasern.

Dabei können nur Glasfasern, nur Karbonfasern oder aber auch eine Mischung aus unterschiedlichen Fasern eingesetzt werden.

In einer beispielhaften Ausführungsform sind die Fasern des flächenförmigen Textils imprägniert.

Das Imprägnieren der Fasern des flächenförmigen Textils bietet den Vorteil, dass dadurch eine bessere Verbindung zwischen den Fasern und der die Fasern umschliessenden Matrix hergestellt werden kann.

In einer beispielhaften Weiterbildung sind die Fasern des flächenförmigen Textils mit demselben Klebstoff imprägniert, welcher auf dem Element angeordnet wird.

Das Verwenden desselben Klebstoffes zur Imprägnierung der Fasern und zur Bildung der Matrix sowie zur Verklebung des flächenförmigen Textils mit dem Element hat den Vorteil, dass dadurch einerseits Prozesse vereinfacht werden können, und andererseits eine optimale Anbindung der Fasern an die Matrix und an das Element gewährleistet werden kann.

In einer beispielhaften Ausführungsform ist das Element ein Abschnitt der Karosserie, insbesondere ein Blech oder ein Profil oder ein Gussteil, oder ein Verstärkungselement zur Verstärkung von hohlen Strukturelementen der Karosserie.

Somit kann das hier vorgeschlagene System auf vielfältige Art und Weise zur Verstärkung von Elementen in Kraftfahrzeugen eingesetzt werden.

In einer beispielhaften Ausführungsform ist das flächenförmige Textil ein Gestricke, ein Gewebe, ein Gelege, ein Geflecht oder ein Gewirke.

Je nach Anforderungen kann das flächenförmige Textil entsprechend ausgestaltet werden.

Die eingangs gestellte Aufgabe wird zudem gelöst durch ein Verfahren zur Verstärkung eines Elementes eines Kraftfahrzeuges, das Verfahren umfassend die Schritte: Anordnen eines Klebstoffes auf dem Element; Anordnen eines einzigen flächenförmigen Textils auf dem Element; und Härten des Klebstoffes; wobei der Klebstoff zugleich ein Matrixharz für Fasern des flächenförmigen Textils bildet und das flächenförmige Textil mit dem Element verklebt.

In einer beispielhaften Ausführungsform werden der Klebstoff und das flächenförmige Textil in einem Schritt auf dem Element angeordnet.

Dies bietet den Vorteil, dass dadurch die Applikation vereinfacht werden kann, indem der Klebstoff und das flächenförmige Textil zusammen auf das Element angeordnet werden.

In einer beispielhaften Ausführungsform umfasst das Verfahren den weiteren Schritt: Tränken des flächenförmigen Textils in Klebstoff, bevor das flächenförmige Textil und der Klebstoff auf dem Element angeordnet werden.

In einer beispielhaften alternativen Ausführungsform umfasst das Verfahren den weiteren Schritt: Applizieren des Klebstoffes auf dem flächenförmigen Textil, insbesondere durch aufsprühen, aufsprayen, aufmalen, aufpinseln, aufextrudieren oder aufgiessen, bevor das flächenförmige Textil und der Klebstoff auf dem Element angeordnet werden.

Dies hat den Vorteil, dass dadurch eine Benetzung der Fasern des flächenförmigen Textils mit dem Klebstoff verbessert werden kann, und dass dadurch das flächenförmige Textil und der Klebstoff zusammen in einem Arbeitsschritt auf das Element aufgebracht werden können.

In einem alternativen Ausführungsbeispiel wird der Klebstoff auf dem Element angeordnet, bevor das flächenförmige Textil auf dem Element angeordnet wird.

Dies hat den Vorteil, dass das flächenförmige Textil trocken gehandhabt, insbesondere trocken gerüstet, zugeschnitten und bewegt, werden kann.

In einer beispielhaften Ausführungsform wird der Klebstoff beim Anordnen auf dem Element auf das Element gesprüht, gesprayt, gemalt, gepinselt, extrudiert oder gegossen.

Je nach Gesamtprozess, in welchem das hier vorgeschlagene Verfahren angewendet wird, kann eine geeignete Art des Anordnens ausgewählt werden.

In einer beispielhaften Ausführungsform wird der Klebstoff manuell oder automatisiert auf dem Element angeordnet.

In einer beispielhaften Ausführungsform wird das flächenförmige Textil manuell oder automatisiert auf dem Element angeordnet.

In einer beispielhaften Ausführungsform wird beim Anordnen des flächenförmigen Textils auf dem Element das flächenförmige Textil als Band auf dem Element abgerollt.

In einer beispielhaften Ausführungsform wird das flächenförmige Textil vor oder nach dem Anordnen auf dem Element zugeschnitten.

In einer beispielhaften Ausführungsform wird die Härtung des Klebstoffes in einem Lackierofen durchgeführt.

Dies hat den Vorteil, dass dadurch ein Prozess zur Aushärtung des Klebstoffes benutzt werden kann, welcher typischerweise sowieso stattfindet. Somit ist kein zusätzlicher Aufwand notwendig, um den Klebstoff auszuhärten.

In einer beispielhaften Ausführungsform umfasst das Verfahren den zusätzlichen Schritt: Imprägnieren der Fasern des flächenförmigen Textils, bevor der Klebstoff mit dem flächenförmigen Textil in Kontakt kommt.

Dies hat den Vorteil, dass dadurch die Fasern des flächenförmigen Textils besser benetzt werden.

In einer beispielhaften Weiterbildung werden die Fasern mit demselben Klebstoff imprägniert, welcher auf dem Element angeordnet wird.

Dadurch wird erreicht, dass eine besonders gute Anbindung des Klebstoffes an Mikrostrukturen der Fasern erzielt werden kann.

In einer beispielhaften Weiterbildung werden die Fasern mit einem Epoxidharzklebstoff oder einem Polyurethanklebstoff und/oder mit einem Einkomponentenklebstoff oder einem Zweikomponentenklebstoff imprägniert.

Einzelheiten und Vorteile der Erfindung werden im Folgenden anhand von Ausführungsbeispielen und mit Bezug auf schematische Zeichnungen beschrieben.

Es zeigen:
- Fig. 1a: schematische Darstellung einer Karosserie;
- Fig. 1b: schematische Darstellung eines verstärkten Querschnittes durch ein Strukturelement; und
- Fig. 2a bis 2c: schematische Darstellung eines beispielhaften Verfahrens zur Verstärkung eines Elementes.

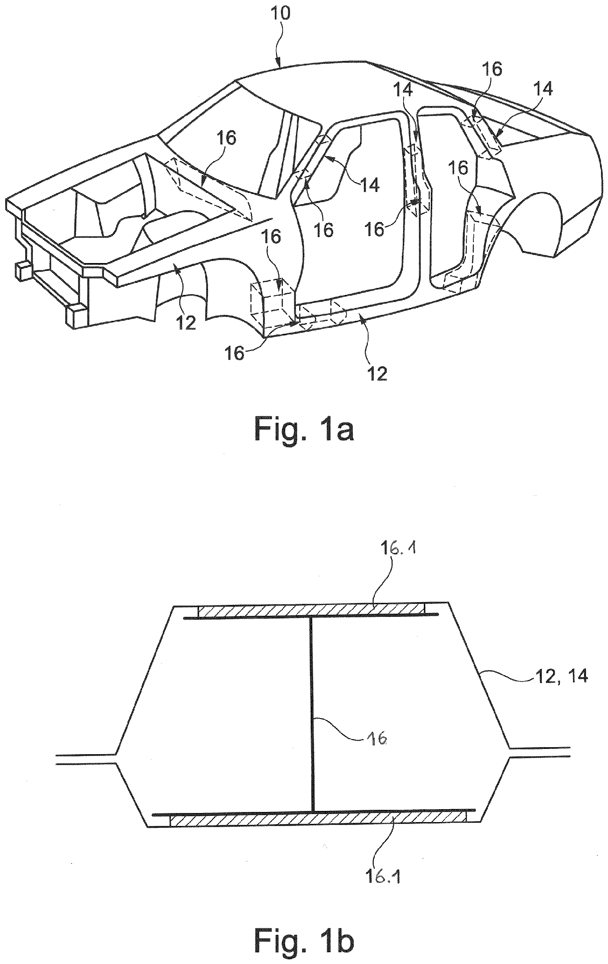

In Fig. 1a ist eine Karosserie eines Automobils schematisch dargestellt. Die Karosserie 10 weist dabei verschiedene Strukturen auf, insbesondere auch Säulen 14 und Träger bzw. Verstrebungen 12. Solche Strukturelemente 12, 14 mit Hohlräumen werden oftmals mit Verstärkungselementen 16 verstärkt.

In Fig. 1b ist schematisch ein Querschnitt durch ein Strukturelement 12, 14 mit einem Hohlraum dargestellt. Dabei hat das Strukturelement 12, 14 ein oberes Blech und ein unteres Blech, welche an Fügestellen zusammengefügt sind und zwischen den Fügestellen einen Hohlraum ausbilden. In diesem Hohlraum ist ein Verstärkungselement 16 angeordnet, welches mit einem Klebstoff 16.1 zur Verklebung des Verstärkungselementes 16 mit dem Strukturelement 12, 14 verklebt ist.

Mit dem hier vorgeschlagenen System eines verstärkten Elementes eines Kraftfahrzeuges bzw. dem hier vorgeschlagenen Verfahren zur Verstärkung eines Elementes eines Kraftfahrzeuges können nun sowohl Elemente der Karosserie 10, wie beispielsweise Bleche, Profile oder Gussteile verstärkt werden, aber auch andere Elemente, wie beispielsweise Verstärkungselemente 16, welche ihrerseits der Verstärkung der Karosserie 10 dienen.

Beispielsweise kann mit dem hier vorgeschlagenen System der Verbindungssteg des Verstärkungselementes 16 gezielt verstärkt werden.

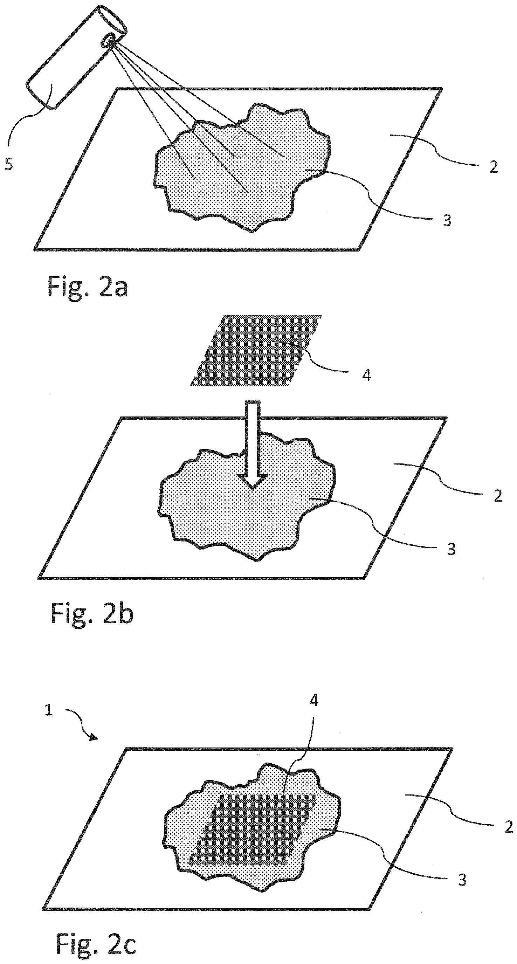

In den Fig. 2a bis 2c ist ein beispielhaftes Verfahren zur Verstärkung eines Elementes eines Kraftfahrzeuges schematisch dargestellt.

In Fig. 2a wird mittels eines Applikators 5 Klebstoff 3 auf dem Element 2 angeordnet. In Fig. 2b wird ein flächenförmiges Textil 4 ebenfalls auf dem Element 2 angeordnet. In Fig. 2c wird der Klebstoff 3 gehärtet, so dass ein System 1 eines verstärkten Elementes 2 eines Kraftfahrzeuges entsteht, bei welchem der Klebstoff 3 zugleich ein Matrixharz für die Fasern des flächenförmigen Textils 4 ist und das flächenförmige Textil 4 mit dem Element 2 verklebt.

Das in den Fig. 2a bis 2c dargestellte Verfahren zur Verstärkung eines Elementes 2 eines Kraftfahrzeuges beinhaltet ein Ausführungsbeispiel, bei welchem der Klebstoff 3 und das flächenförmige Textil 4 separat auf das zu verstärkende Element 2 angeordnet werden. In einer nicht dargestellten alternativen Ausführungsform werden das flächenförmige Textil und der Klebstoff gemeinsam auf das zu verstärkende Element angeordnet, indem beispielsweise das flächenförmige Textil vor dem Anordnen auf dem Element im Klebstoff getränkt wird.

Das in den Fig. 2a bis 2c dargestellte Verfahren zur Verstärkung eines Elementes 2 eines Kraftfahrzeuges beinhaltet ein Ausführungsbeispiel, bei welchem das flächenförmige Textil 4 als Gewebe ausgebildet ist. Alternativ dazu können auch andere flächenförmige Textilien, wie beispielsweise Gestricke, Gelege, Geflechte oder Gewirke verwendet werden.

Das in den Fig. 2a bis 2c dargestellte Verfahren zur Verstärkung eines Elementes 2 eines Kraftfahrzeuges beinhaltet ein Ausführungsbeispiel, bei welchem der Klebstoff 3 durch einen Applikator 5 auf das Element 2 gesprüht wird. Alternativ dazu können auch andere Arten der Anordnung des Klebstoffes verwendet werden, wie beispielsweise Malen, Pinseln, Extrudieren, Giessen, oder gemeinsames Anbringen des Klebstoffes mit dem flächenförmigen Textil (indem das Textil beispielsweise in Klebstoff getränkt wird, bevor es auf dem Element angeordnet wird).

### Bezugszeichenliste

- 1: System
- 2: Element
- 3: Klebstoff
- 4: flächenförmiges Textil
- 5: Applikator
- 10: Karosserie
- 12: Strukturelement
- 14: Strukturelement
- 16: Verstärkungselement
- 16.1: Klebstoff zur Verklebung des Verstärkungselementes mit dem Strukturelement

## Patentansprüche

1. System (1) eines verstärkten Elementes (2) eines Kraftfahrzeuges, das System (1) umfassend:
ein Element (2) eines Kraftfahrzeuges;
einen Klebstoff (3), welcher auf dem Element (2) angeordnet ist; und
ein einziges flächenförmiges Textil (4), welches auf dem Element (2) angeordnet ist;
wobei der eine Klebstoff (3) zugleich ein Matrixharz für Fasern des flächenförmigen Textils (4) bildet und das flächenförmige Textil (4) mit dem Element (2) verklebt.

2. System (1) nach Anspruch 1, wobei der Klebstoff (3) ein härtbarer Klebstoff ist oder ein hitzehärtbarer Klebstoff ist, welcher bei einer Temperatur von zumindest 120°C aushärtet, und/oder
wobei der Klebstoff (3) ein Epoxidharzklebstoff oder ein Polyurethanklebstoff ist, und/oder
wobei der Klebstoff (3) ein Einkomponentenklebstoff oder ein Zweikomponentenklebstoff ist.

3. System (1) nach einem der vorhergehenden Ansprüche, wobei der Klebstoff (3) nach einer Härtung ein E-Modul von zumindest 100 MPa hat.

4. System (1) nach einem der vorhergehenden Ansprüche, wobei der Klebstoff (3) als Klebstofffilm auf dem Element (2) angeordnet ist, und/oder wobei der Klebstoff (3) eine durchschnittliche Dicke von 0,1 mm bis 5 mm vor einer Aushärtung hat.

5. System (1) nach einem der vorhergehenden Ansprüche, wobei das flächenförmige Textil (4) eine Dicke von 0,5 mm bis 1,5 mm hat, und/oder wobei das flächenförmige Textil (4) Glasfasern oder Karbonfasern enthält.

6. System (1) nach einem der vorhergehenden Ansprüche, wobei das Element (2) ein Abschnitt der Karosserie (10), insbesondere ein Blech oder ein Profil oder ein Gussteil, oder ein Verstärkungselement (16) zur Verstärkung von hohlen Strukturelementen (12, 14) der Karosserie (10) ist.

7. System (1) nach einem der vorhergehenden Ansprüche, wobei das flächenförmige Textil (4) ein Gestricke, ein Gewebe, ein Gelege, ein Geflecht oder ein Gewirke ist.

8. Kraftfahrzeug umfassend ein System (1) nach einem der Ansprüche 1 bis 7.

9. Verfahren zur Verstärkung eines Elementes (2) eines Kraftfahrzeuges, das Verfahren umfassend die Schritte:
Anordnen eines Klebstoffes (3) auf dem Element (2);
Anordnen eines einzigen flächenförmigen Textils (4) auf dem Element (2); und
Härten des Klebstoffes (3);
wobei der Klebstoff (3) zugleich ein Matrixharz für Fasern des flächenförmigen Textils (4) bildet und das flächenförmige Textil (4) mit dem Element (2) verklebt.

10. Verfahren nach Anspruch 9, wobei der Klebstoff (3) und das flächenförmige Textil (4) in einem Schritt auf dem Element (2) angeordnet werden.

11. Verfahren nach Anspruch 10, wobei das Verfahren den weiteren Schritt umfasst:
Tränken des flächenförmigen Textils (4) im Klebstoff (3), bevor das flächenförmige Textil (4) und der Klebstoff (3) auf dem Element (2) angeordnet werden.

12. Verfahren nach Anspruch 9 bis 11, wobei das flächenförmige Textil (4) ein Gestricke, ein Gewebe, ein Gelege, ein Geflecht oder ein Gewirke ist.

13. Verfahren nach Anspruch 9, wobei der Klebstoff (3) auf dem Element (2) angeordnet wird, bevor das flächenförmige Textil (4) auf dem Element (2) angeordnet wird.

14. Verfahren nach Anspruch 13, wobei der Klebstoff (3) beim Anordnen auf dem Element (2) auf das Element (2) gesprüht, gesprayt, gemalt, gepinselt, extrudiert oder gegossen wird.

15. Verfahren nach einem der Ansprüche 9 bis 14, wobei das Verfahren mit einem System (1) nach einem der Ansprüche 1 bis 7 durchgeführt wird.
